# EUROPÄISCHE PATENTSCHRIFT

(11) **EP 2 578 748 B1**
(45) Veröffentlichungstag und Bekanntmachung des Hinweises auf die Patenterteilung: **29.08.2018**
(21) Anmeldenummer: 11008029.8
(22) Anmeldetag: 04.10.2011
(51) Int. Cl.: E01C 19/48, B60Q 1/24

(54) **Außensteuerstand für eine Baumaschine**
External control panel for a construction machine
Panneau de commande extérieur pour un engin

(43) Veröffentlichungstag der Anmeldung: 10.04.2013
(73) Patentinhaber: Joseph Vögele AG, 67067 Ludwigshafen (DE)
(72) Erfinder: Eul, Achim, 68305 Mannheim (DE); Ramb, Horst, 67551 Worms (DE)
(74) Vertreter: Grünecker Patent- und Rechtsanwälte PartG mbB

(56) Entgegenhaltungen:
- DE-U1- 9 204 559
- DE-U1-202009 018 279
- US-A1- 2011 236 131

## Beschreibung

Die Erfindung bezieht sich auf einen Außensteuerstand für eine Baumaschine gemäß dem Oberbegriff des Anspruchs 1.

Solche Außensteuerstände für selbstfahrende Baumaschinen sind aus der Praxis bekannt. Sie werden beispielsweise bei Straßenfertigern eingesetzt, um hauptsächlich während der Fahrt Einstellungen an einer Arbeitskomponente des Straßenfertigers vorzunehmen. Beispielsweise kann es während der Einbaufahrt notwendig sein, die am Straßenfertiger montierte Einbaubohle, insbesondere eine in ihrer Breite veränderbare Ausziehbohle, zu verstellen, um deren Lage dem Straßenverlauf anzupassen oder um Hindernissen auszuweichen.

Es ist weiter bekannt, dass Straßenfertiger häufig bei Dunkelheit oder in Straßentunneln zum Straßenbau eingesetzt werden. Um dem Bedienpersonal eine ausreichende Beleuchtung des Fahrtweges zu gewährleisten, werden Hilfsleuchten verwendet. Aus der DE 92 04 559 U1 ist zudem ein Straßenfertiger mit einem beleuchteten Fernbedienungsgerät bekannt. Aus einem ganz anderen technischen Gebiet, nämlich aus dem Landmaschinenbau, sind Beleuchtungseinrichtungen bekannt, die an Rahmenteilen von Bodenbearbeitungswerkzeugen angeordnet sind, wie z. B. in der DE 20 2009 018 279 U1 offenbart. Hilfsleuchten bei herkömmlichen Straßenfertigern hingegen werden über externe Steckdosen oder Klemmen zum Einsatz gebracht, wie z. B. in der US 2011/0236131 A1 offenbart. Nachteilig daran ist, dass externe Steckdosen oder Klemmen vorgesehen werden müssen und verschmutzen können. Darüber hinaus müssen diese separaten Hilfsleuchten auf geeignete Weise getragen beziehungsweise gehalten werden.

Aufgabe der vorliegenden Erfindung ist es, einen Außensteuerstand für eine Baumaschine zur Verfügung zu stellen, der mit konstruktiv möglichst einfachen Mitteln einen besseren Betrieb der Baumaschine ermöglicht.

Diese Aufgabe wird gelöst durch einen Außensteuerstand mit den Merkmalen des Anspruchs 1. Vorteilhafte Weiterbildungen der Erfindung sind in den Unteransprüchen angegeben.

Erfindungsgemäß ist am Außensteuerstand einer selbstfahrenden Baumaschine eine Beleuchtungseinrichtung vorgesehen. Die Beleuchtungseinrichtung dient zum Ausleuchten eines Bodenfeldes, das in Fahrtrichtung vor, hinter und/oder unterhalb des Außensteuerstands angeordnet ist. Diese Beleuchtungseinrichtung bietet den Vorteil, dass keine über eine externe Steckdose versorgte Hilfsleuchte notwendig ist. Somit muss weder eine Steckdose bereitgestellt werden, noch muss das Bedienpersonal eine zusätzliche Leuchte halten oder festklemmen. In der Handhabung des Straßenfertigers tritt bei Dunkelheit folglich keine Beeinträchtigung auf. Als Leuchtmittel für die Beleuchtungseinrichtung eignen sich beispielsweise eine Einzel-LED oder ein Feld von LEDs.

Die Beleuchtungseinrichtung ist in den Außensteuerstand integriert. Hierfür weist das Gehäuse des Außensteuerstands eine entsprechende Aussparung an seiner der Straßenoberfläche zugewandten Seite auf. Vorteilhaft daran ist, dass die Beleuchtungseinrichtung vor mechanischen Beeinträchtigungen geschützt ist. Des Weiteren werden zusätzliche Anbauteile vermieden.

Zweckmäßig ist es, wenn eine transparente und/oder transluzente Abdeckung für die Beleuchtungseinrichtung vorgesehen ist. Eine solche Abdeckung schützt die Beleuchtungseinrichtung wirkungsvoll vor Staub, Spritzwasser oder sonstigen Umwelteinflüssen. Trotzdem ist die Abdeckung lichtdurchlässig, so dass die Wirkung der Beleuchtungseinrichtung sichergestellt ist. Vorzugsweise ist die Abdeckung aus einem geeigneten Kunststoff gefertigt. Eine optionale Dichtung an der Abdeckung vermeidet zusätzlich das Eindringen von Staub oder Feuchtigkeit in die Beleuchtungseinrichtung.

Besonders vorteilhaft ist es, wenn die Abdeckung der Beleuchtungseinrichtung mit einer lösbaren Verbindung an dem Außensteuerstand befestigt ist. Dies ermöglicht es, Wartungsarbeiten an der Beleuchtungseinrichtung vorzunehmen, ohne größere Teile des Außensteuerstands zu demontieren. Dies gewährleistet eine verbesserte Wartbarkeit der Beleuchtungseinrichtung.

In einer vorteilhaften Variante der Erfindung weist der Außensteuerstand eine Streuscheibe für die Beleuchtungseinrichtung auf. Durch entsprechende Muster in der Streuscheibe ist eine gewünschte Streuung oder Dämpfung des Lichtstrahls einstellbar.

Besonders vorteilhaft ist es, wenn die Beleuchtungseinrichtung hinsichtlich ihrer Ausrichtung relativ zum Außensteuerstand fest ist. Dies ermöglicht eine festgelegte, stabile und vibrationsfeste Ausleuchtung des Bodenfeldes.

Es kann jedoch auch vorteilhaft sein, wenn die Beleuchtungseinrichtung hinsichtlich ihrer Ausrichtung relativ zum Außensteuerstand variabel einstellbar ist. Dadurch kann der Lichtstrahl in bestimmte Richtungen gelenkt werden, um das ausgeleuchtete Bodenfeld aktiv zu beeinflussen. Durch geeignete Dämpfungseinrichtungen können Nachteile bei auftretenden Vibrationen vermieden werden.

Besonders vorteilhaft ist es, wenn die Beleuchtungseinrichtung vom Außensteuerstand aktivierbar und/oder deaktivierbar ist. So kann das Bedienpersonal am Außensteuerstand selbst steuern, wann die Beleuchtungseinrichtung aktiviert beziehungsweise deaktiviert ist.

Zweckmäßig ist es, wenn die Helligkeit der Beleuchtungseinrichtung variabel ist. Damit lässt sich die Ausleuchtung des Bodenfeldes zusätzlich beeinflussen und den äußeren Bedingungen anzupassen.

Eine besonders vorteilhafte Variante der Erfindung sieht vor, dass die Beleuchtungseinrichtung für das automatische Aktivieren und/oder Deaktivieren durch einen lichtempfindlichen Sensor konfiguriert ist. Somit kann die Beleuchtungseinrichtung z.B. beim Einfahren in einen Straßentunnel ohne Zutun des Bedienpersonals aktiviert werden, so dass das Bedienpersonal beim Steuern der Baumaschine nicht abgelenkt wird.

Um lose Kabelverbindungen zu vermeiden, kann eine für den Außensteuerstand und die Beleuchtungseinrichtung gemeinsame Einrichtung für die Energieversorgung vorgesehen sein.

Besonders vorteilhaft ist es, wenn der Außensteuerstand an einer relativ zu einem Tragrahmen der Baumaschine verfahrbaren und/oder verschwenkbaren Arbeitskomponente angebracht ist, beispielsweise an einer Einbau- oder Ausziehbohle. Damit wird beim Schwenken oder Verfahren der Arbeitskomponente die Beleuchtungseinrichtung mitbewegt, so dass eine optimale Ausleuchtung des veränderten Bodenfeldes gewährleistet ist.

Die Erfindung bezieht sich auch auf eine Baumaschine, beispielsweise einen Straßenfertiger oder einen Beschicker, mit einem Außensteuerstand der vorstehend beschriebenen Art.

Im Folgenden wird ein vorteilhaftes Ausführungsbeispiel der Erfindung anhand einer Zeichnung näher dargestellt. Im Einzelnen zeigen:
- Figur 1: eine Seitenansicht eines erfindungsgemäßen Außensteuerstands an einem Straßenfertiger als Beispiel einer selbstfahrenden Baumaschine, und

- Figur 2: eine schematische Unteransicht eines erfindungsgemäßen Außensteuerstands mit einer erfindungsgemäßen Beleuchtungseinrichtung.

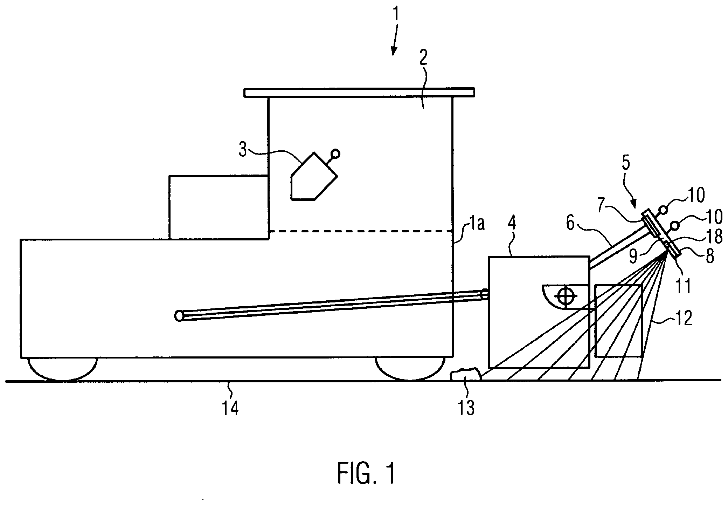

Figur 1 zeigt eine schematisch dargestellte Baumaschine 1, bei der es sich in diesem Ausführungsbeispiel um einen Straßenfertiger handelt. Die Baumaschine 1 weist einen Tragrahmen 1a auf. Zur Steuerung der Hauptfunktionen wie beispielsweise dem Fahren und Lenken der Baumaschine 1 verfügt die Baumaschine 1 über einen Führerstand 2, der ein Bedienpult 3 aufnimmt. Die Baumaschine 1 weist an ihrem in Fahrtrichtung hinteren Ende eine Arbeitskomponente 4 in Form einer Einbaubohle auf. Die Arbeitskomponente 4 ist verschiebbar, auszieh- oder ausfahrbar und verschwenkbar an der Baumaschine 1 befestigt.

Für die Steuerung der Arbeitskomponente 4 verfügt die Baumaschine 1 über einen in Fahrtrichtung hinter der Arbeitskomponente 4 angeordneten Außensteuerstand 5. Der Außensteuerstand 5 ist vor allem dafür vorgesehen, die Arbeitskomponente 4 während eines Einbauvorgangs gemäß dem Straßenverlauf oder Hindernissen auszurichten. Der Außensteuerstand 5 wird üblicherweise von einer Person, die sich zu Fuß gehend mit der Baumaschine 1 bewegt, bedient. Die Arbeitskomponente 4 kann elektrohydraulisch betätigt werden

Der Außensteuerstand 5 umfasst eine Haltevorrichtung 6 zur Befestigung des Außensteuerstands 5 an der Arbeitskomponente 4. Der Außensteuerstand 5 ist dabei so an der Arbeitskomponente 4 befestigt, dass er sich beim Schwenken und seitlichen Ausfahren der Arbeitskomponente 4 stets mitbewegt. An der Haltevorrichtung 6 ist mittels einer Halteraufnahme 7 ein Bedienpaneel 8 befestigt. Das Bedienpaneel 8 weist ein aus Kunststoff gefertigtes Gehäuse 9 auf, das auf seiner Oberseite über Bedienelemente 10 zur Steuerung der Arbeitskomponente 4 verfügt. Auf der Unterseite des Gehäuses ist die Halteraufnahme 7 in das Gehäuse integriert.

Weiter verfügt das Gehäuse 9 des Bedienpaneels 8 erfindungsgemäß über eine in das Gehäuse 9 integrierte Beleuchtungseinrichtung 11. Die Beleuchtungseinrichtung 11 ist dafür vorgesehen, sichtbares Licht 12 vom Außensteuerstand 5 auszusenden. Das erzeugte Licht 12 ermöglicht es so beispielsweise, ein Hindernis 13 auf der Fahrtstrecke 14 zu entdecken und die Arbeitskomponente 4 entsprechend daran vorbei zu steuern.

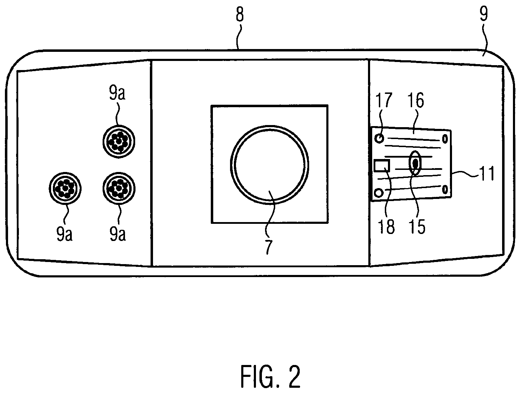

Anhand von Figur 2, die die Unterseite des Bedienpaneels 8 schematisch darstellt, soll die Anordnung der erfindungsgemäßen Beleuchtungseinrichtung 11 am Außensteuerstand 5 näher erläutert werden. Das Gehäuse 9 verfügt über mehrere elektrische Anschlüsse 9a, die als Schnittstelle zwischen dem Bedienpaneel 8 und der Arbeitskomponente 4 bzw. der Baumaschine 1 dienen. Wie oben beschrieben, ist die Beleuchtungseinrichtung 11 in das Gehäuse 9 des Bedienpaneels 8 integriert. Hierzu verfügt das Gehäuse 9 über eine Aussparung, die in etwa die Größe der Beleuchtungseinrichtung 11 aufweist und die Beleuchtungseinrichtung 11 aufnimmt. Das Gehäuse 9 verfügt über einen darin angebrachten elektrischen Anschluss für ein Leuchtmittel 15 der Beleuchtungseinrichtung 11. Abgedeckt und somit vor Staub, Spritzwasser oder sonstigen Umwelteinflüssen geschützt, wird das Leuchtmittel 15 von einer Abdeckung 16. Die Abdeckung 16 ist lichtdurchlässig (transluzent) ausgeführt und kann darüber hinaus auch durchsichtig gestaltet sein. Die Abdeckung 16 kann als Streuscheibe dienen, um eine optimale Ausleuchtung der Fahrstrecke 14 zu erreichen.

Befestigt ist die Abdeckung 16 mittels einer Schraubenverbindung 17 an dem Gehäuse 9 des Bedienpanels 8. Die Ausrichtung der Beleuchtungseinrichtung 11 am Außensteuerstand 5 ist optimalerweise so gestaltet, dass das sichtbare Licht 12 nicht von der Arbeitskomponente 4 behindert wird.

Während des Betriebs der Baumaschine 1 kann die Beleuchtungseinrichtung 11 mittels des Bedienpanels 8 aktiviert beziehungsweise deaktiviert werden. Im eingeschalteten Zustand beträgt die Beleuchtungsstärke der Beleuchtungseinrichtung 11 mindestens 15 Ix, wobei der Objektabstand (d.h. der Abstand zur Fahrstrecke 14) etwa 1,4 Meter beträgt. Die damit ausgeleuchtete Fläche umfasst circa einen Quadratmeter. Dies entspricht einem Abstrahlwinkel des Leuchtmittels 15 (d. h. der Öffnungswinkel des von der Beleuchtungseinrichtung ausgesandten Lichtkegels) von etwa 65° bis 70°. Der mittlere Winkel zwischen der in das Gehäuse integrierten Beleuchtungseinrichtung 11 und der Fahrbahn 14 beträgt zwischen 30° und 80°, vorzugsweise jedoch mindestens 45°, gegenüber der Vertikalen.

Ausgehend von dem dargestellten Ausführungsbeispiel kann der erfindungsgemäße Außensteuerstand 5 auf vielfache Weise abgeändert werden. Beispielsweise wäre es möglich, für die Beleuchtungseinrichtung 11 einen lichtempfindlichen Sensor 18 vorzusehen, der die Beleuchtungseinrichtung 11 bei Dämmerung oder Dunkelheit, zum Beispiel beim Einfahren in einen Straßentunnel, automatisch aktiviert. Der Sensor 18 könnte z.B. auch in Fahrtrichtung der Baumaschine 1 vor der Arbeitskomponente angeordnet sein. Darüber hinaus könnte die Helligkeit der Beleuchtungseinrichtung 11 variabel einstellbar sein. Des Weiteren könnte vorgesehen sein, dass die Beleuchtungseinrichtung 11 hinsichtlich ihrer Ausrichtung relativ zum Außensteuerstand 5 variabel einstellbar ist. In einer weiteren Ausführungsvariante der Erfindung könnte der Abstrahlwinkel der Beleuchtungseinrichtung 11 variabel einstellbar sein. Dies könnte beispielsweise durch eine veränderbare Linse oder einen verstellbaren Reflektor realisiert werden.

## Patentansprüche

1. Außensteuerstand (5) für eine selbstfahrende Baumaschine (1), wobei der Außensteuerstand (5) für das Steuern mindestens einer Arbeitskomponente (4) der Baumaschine (1) konfiguriert ist, **dadurch gekennzeichnet, dass** am Außensteuerstand (5) eine Beleuchtungseinrichtung (11) zum Ausleuchten eines Bodenfeldes in Fahrtrichtung der Baumaschine (1) vor, hinter und/oder unterhalb des Außensteuerstands (5) vorgesehen ist, und dass die Beleuchtungseinrichtung (11) in den Außensteuerstand (5) integriert ist, wobei das Gehäuse (9) des Außensteuerstands (5) hierfür eine entsprechende Aussparung an seiner der Straßenoberfläche zugewandten Seite aufweist.

2. Außensteuerstand nach Anspruch 1, **dadurch gekennzeichnet, dass** eine transparente und/oder transluzente Abdeckung (16) für die Beleuchtungseinrichtung (11) vorgesehen ist.

3. Außensteuerstand nach Anspruch 2, **dadurch gekennzeichnet, dass** die Abdeckung (16) mit einer lösbaren Verbindung an dem Außensteuerstand (5) befestigt ist.

4. Außensteuerstand nach einem der vorangehenden Ansprüche, **dadurch gekennzeichnet, dass** eine Streuscheibe (16) für die Beleuchtungseinrichtung (11) vorgesehen ist.

5. Außensteuerstand nach einem der vorangehenden Ansprüche, **dadurch gekennzeichnet, dass** die Beleuchtungseinrichtung (11) hinsichtlich ihrer Ausrichtung relativ zum Außensteuerstand (5) fest ist.

6. Außensteuerstand nach einem der Ansprüche 1 bis 4, **dadurch gekennzeichnet, dass** die Beleuchtungseinrichtung (11) hinsichtlich ihrer Ausrichtung relativ zum Außensteuerstand (5) variabel einstellbar ist.

7. Außensteuerstand nach einem der vorangehenden Ansprüche, **dadurch gekennzeichnet, dass** eine Verstellung des Außensteuerstands (5) das von der Beleuchtungseinrichtung (11) ausgeleuchtete Bodenfeld beeinflusst.

8. Außensteuerstand nach einem der vorangehenden Ansprüche, **dadurch gekennzeichnet, dass** die Beleuchtungseinrichtung (11) vom Außensteuerstand (5) aktivierbar und/oder deaktivierbar ist.

9. Außensteuerstand nach einem der vorangehenden Ansprüche, **dadurch gekennzeichnet, dass** die Helligkeit der Beleuchtungseinrichtung (11) variabel ist.

10. Außensteuerstand nach einem der vorangehenden Ansprüche, **dadurch gekennzeichnet, dass** die Beleuchtungseinrichtung (11) für das automatische Aktivieren und/oder Deaktivieren durch einen lichtempfindlichen Sensor (18) konfiguriert ist.

11. Außensteuerstand nach einem der vorangehenden Ansprüche, **dadurch gekennzeichnet, dass** eine für den Außensteuerstand (5) und die Beleuchtungseinrichtung (11) gemeinsame Einrichtung für die Energieversorgung vorgesehen ist.

12. Außensteuerstand nach einem der vorangehenden Ansprüche, **dadurch gekennzeichnet, dass** der Außensteuerstand (5) an einer relativ zu einem Tragrahmen (1a) der Baumaschine (1) verfahrbaren und/oder verschwenkbaren Arbeitskomponente (3) angebracht ist.

13. Baumaschine (1) mit einem Außensteuerstand (5) nach einem der vorangehenden Ansprüche.

14. Baumaschine nach Anspruch 13, wobei die Baumaschine (1) ein Straßenfertiger oder Beschicker ist.

## Claims

1. External control stand (5) for a self-propelled construction machine (1) wherein the external control stand (5) is configured for controlling at least one working component (4) of the construction machine (1), **characterised in that** a lighting device (11) is provided on the external control stand (5) for illuminating a ground section, in front of, behind and/or below the external control stand (5) as seen in the direction of travel of the construction machine (1), and that the lighting device (11) is integrated into the external control stand (5), wherein the housing (9) of the external control stand (5), for this purpose, has a corresponding recess on its surface that faces towards the road surface.

2. External control stand according to claim 1 **characterised in that** a transparent and/or translucent cover (16) is provided for the lighting device (11).

3. External control stand according to Claim 2 **characterised in that** the cover (16) is mounted to the external control stand (5) using a detachable connection.

4. External control stand according to one of the preceding claims **characterised in that** a diffuser lens (16) is provided for the lighting device (11).

5. External control stand according to one of the preceding claims **characterised in that** the lighting device (11) is fixed with regard to its orientation relative to the external control stand (5).

6. External control stand according to one of the Claims 1 to 4 **characterised in that** the lighting device (11) is variably adjustable with regard to its orientation relative to the external control stand (5).

7. External control stand according to one of the preceding claims **characterised in that** an adjustment of the external control stand (5) influences the ground section that is illuminated by the lighting device (11).

8. External control stand according to one of the preceding claims **characterised in that** the lighting device (11) can be activated and/or deactivated from the external control stand (5).

9. External control stand according to one of the preceding claims **characterised in that** the brightness of the lighting device (11) is variable.

10. External control stand according to one of the preceding claims **characterised in that** the lighting device (11) is configured for automatic activation and/or deactivation by a light-sensitive sensor (18).

11. External control stand according to one of the preceding claims **characterised in that** a common power supply device is provided for the external control stand (5) and the lighting device (11).

12. External control stand according to one of the preceding claims **characterised in that** the external control stand (5) is attached to a working component (4) that can be moved and/or pivoted relative to a supporting frame (1a) of the construction machine (1).

13. Construction machine (1) with an external control stand (5) according to one of the preceding claims.

14. Construction machine according to Claim 13 wherein the construction machine (1) is a road paver or feeder.

## Revendications

1. Poste de commande extérieur (5) pour un engin de construction de routes automoteur (1), le poste de commande extérieur (5) étant configuré pour piloter au moins un composant de travail (4) de l'engin de construction de routes (1),
**caractérisé en ce que** sur le poste de commande extérieur (5), il est prévu un dispositif d'éclairage (11) pour éclairer un champ au sol devant, derrière et/ou en-dessous du poste de commande extérieur (5) en se référant au sens de marche de l'engin de construction de routes (1), et **en ce que** le dispositif d'éclairage (11) est intégré au poste de commande extérieur (5), le boitier (9) du poste de commande extérieur (5) présentant à cet effet, un évidement correspondant sur son côté dirigé vers la surface de la route.

2. Poste de commande extérieur selon la revendication 1, **caractérisé en ce qu'**il est prévu un capot de recouvrement (16) transparent et/ou translucide pour le dispositif d'éclairage (11).

3. Poste de commande extérieur selon la revendication 2, **caractérisé en ce que** le capot de recouvrement (16) est fixé par une liaison démontable au poste de commande extérieur (5).

4. Poste de commande extérieur selon l'une des revendications précédentes, **caractérisé en ce qu'**il est prévu une plaque de diffuseur (16) pour le dispositif d'éclairage (11).

5. Poste de commande extérieur selon l'une des revendications précédentes, **caractérisé en ce que** le dispositif d'éclairage (11) est fixe quant à son orientation par rapport au poste de commande extérieur (5) .

6. Poste de commande extérieur selon l'une des revendications 1 à 4, **caractérisé en ce que** le dispositif d'éclairage (11) est réglable de manière variable quant à son orientation par rapport au poste de commande extérieur (5).

7. Poste de commande extérieur selon l'une des revendications précédentes, **caractérisé en ce qu'**un déplacement du poste de commande extérieur (5) influence le champ au sol éclairé par le dispositif d'éclairage (11).

8. Poste de commande extérieur selon l'une des revendications précédentes, **caractérisé en ce que** le dispositif d'éclairage (11) peut être activé et/ou désactivé à partir du poste de commande extérieur (5).

9. Poste de commande extérieur selon l'une des revendications précédentes, **caractérisé en ce que** la luminosité du dispositif d'éclairage (11) est variable.

10. Poste de commande extérieur selon l'une des revendications précédentes, **caractérisé en ce que** le dispositif d'éclairage (11) est configuré pour l'activation et/ou la désactivation par un capteur (18) sensible à la lumière.

11. Poste de commande extérieur selon l'une des revendications précédentes, **caractérisé en ce qu'**il est prévu un ensemble d'alimentation en énergie commun pour le poste de commande extérieur (5) et le dispositif d'éclairage (11).

12. Poste de commande extérieur selon l'une des revendications précédentes, **caractérisé en ce que** le poste de commande extérieur (5) est placé sur un composant de travail (4) qui est susceptible d'être déplacé et/ou de pivoter par rapport à un châssis porteur (1a) de l'engin de construction de routes (1).

13. Engin de construction de routes (1) comprenant un poste de commande extérieur (5) selon l'une des revendications précédentes.

14. Engin de construction de routes selon la revendication 13, l'engin de construction de routes (1) étant un finisseur de route ou un alimentateur.
